(19)

Europäisches
Patentamt
European
Patent Office
Office européen
des brevets

(11) **EP 2 731 061 A1**

(12) **EUROPEAN PATENT APPLICATION**

(43) Date of publication:
**14.05.2014 Bulletin 2014/20**

(51) Int Cl.:
***G06N 5/00*** *(2006.01)* ***G06N 5/02*** *(2006.01)*
***G06F 17/30*** *(2006.01)*

(21) Application number: **12191691.0**

(22) Date of filing: **07.11.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(71) Applicant: **FUJITSU LIMITED**
**Kawasaki-shi,**
**Kanagawa 211-8588 (JP)**

(72) Inventors:
• **Carvalho, Nuno**
**Hayes, Middlesex UB4 8FE (GB)**

• **Hu, Bo**
**Huntingdon, Cambridgeshire PE29 6JL (GB)**
• **Naseer, Aisha**
**Hayes, Middlesex UB4 8FE (GB)**

(74) Representative: **Hutchison, James**
**Haseltine Lake LLP**
**300 High Holborn**
**London, Greater London WC1V 7JH (GB)**

Remarks:
Amended claims in accordance with Rule 137(2) EPC.

(54) **Program, method, and database system for storing descriptions**

(57) Invention embodiments include a data storage system comprising: a data storage configured to store a description of each of a plurality of entities, the description of an entity comprising one or more pieces of information, each piece of information representing a property contributing to the description, the data storage being further configured to store, in association with each of the one or more pieces of information, a quantitative indication of the significance of the property in describing the entity; and a data read and write mechanism configured: to prioritise data read operations based on the quantitative indications of the properties represented by pieces of information to be read; and/or to prioritise data write operations based on the quantitative indications of the properties represented by pieces of information to be written.

FIGURE 1

**Description**

The present invention lies in the field of data storage. In particular, the present invention relates to storing descriptive data, which may be referred to as semantic data or ontological data, and the associated read and write operations.

Knowledge bases are stored data providing information about entities by storing data in a format which enables the knowledge to be queried and meaningful data returned. Data models, for example graph data models, provide formats suitable for storing descriptive data, and graph data models or equivalents are widely adopted in ontology-based applications. As the size of knowledge bases grows, it becomes imperative to distribute the stored data to multiple storage units for better scalability and performance.

The distribution of data to multiple storage servers brings several data consistency problems at both the data consistency and semantic consistency levels. On one side, even though strong consistency models are easy to use by applications, they bring many performance problems, in particular for applications with frequent updates. Adopting a weaker consistency model can help improving both scalability and performance, but reliability of data is sacrificed.

Many storage systems, particularly those storing large amounts of data, adopt a relaxed consistency model known as eventual consistency. This model defines that when a write operation is issued to the system, the point-in-time consistency is relaxed: instead of at the time of transaction being carried out, "eventually" at a "future" point-in-time the result of that write operation will be visible on all subsequent read operations. This weaker model is of particular interest when a large amount of data needs to be distributed to a high number of storage servers for scalability and performance.

It is desirable to store data in a way which facilitates reliable data query operations, but which does not place too high a demand on computing resources at the storage facility.

Embodiments of the present invention provide a data storage configured to store a description of each of a plurality of entities, the description of an entity comprising one or more pieces of information, each piece of information representing a property contributing to the description, the data storage being further configured to store, in association with each of the one or more pieces of information, a quantitative indication of the significance of the property in describing the entity; and a data read and write mechanism configured: to prioritise data read operations based on the quantitative indications of the properties represented by pieces of information to be read; and alternatively or additionally configured to prioritise data write operations based on the quantitative indications of the properties represented by pieces of information to be written.

Advantageously, embodiments of the present invention provide a mechanism by which data read and write operations can be prioritised. Data read operations which include reading all of the pieces of information describing an entity can be approached in a new way by reading the pieces of information in descending order of quantitative indications, so that most important or significant pieces of information are read first. There are many potential benefits of such a mechanism, for example, if a read operation is interrupted mid-way through, then an application may already have sufficient information about an entity without having to wait for the end of the interruption. In addition, write operations can be prioritised based on the quantitative indications attributed to pieces of information being added to the database. Benefits include, for example, ensuring that more significant pieces of information are updated first so that data integrity of more significant information pieces can be prioritised over that of less significant information pieces.

The storage of pieces of information with a quantitative indication of their significance in defining an entity provides a mechanism that quantifies the quality of data when it is retrieved from the data storage. The quantitative indications provide a basis upon which to prioritise co-pending read and/or write operations. Therefore, computing resources can be targeted at write operations which ensure consistency of important data, and superfluous read operations for non-significant data items can be reduced or delayed until more important data items have been read. An overall benefit of being able to prioritise read and write operations in this way is that semantic accuracy of data in the data storage is improved by devoting computing resources to write operations which have more of an influence on accuracy.

Embodiments of the present invention enable data storage systems to implement a weak consistency model (and thus incur a lighter processing cost) enhanced by quantitative assessments of data items which enable the more significant data items to be identified and their reading/writing prioritised. Pieces of information stored in the data storage which describe entities are stored with a quantitative indication of the extent to which the semantic constraint represented by that piece of information contributes to the definition/description of the entity. As such, the quantitative indications provide a mechanism for a user application to assess to what extent one is confident with pieces of information (data) read about an entity, the completeness of data, and with the inferences based on the data.

Embodiments provide a data storage system which stores data with an additional quantitative indication representing the significance of the data in describing a database entity. Thus, a metric is provided for prioritising the write operation using the quantitative indication (representing a semantic contributing factor), which can be updated to incorporate domain heuristics and be calculated using systematic weighting schema. The quantitative indication provides a basis to quantify the confidence of read operations by leveraging the quantitative indications attached to the written data.

Data graphs, otherwise referred as graph databases, or graph datasets, provide a representation of semantic knowledge models. The data storage in embodiments of the present invention may be a database, for example, a graph database. Relational databases store data in rows and columns. The rows and columns compose tables that need to be defined before storing the data. The definition of the tables and the relationship between data contained on these tables is called a schema. A relational database uses a fixed schema. Graph databases represent a significant extension over relational databases by storing data in the form of nodes and arcs, where a node represents an entity or instance, and an arc represents a relationship of some type between any two nodes. In an undirected graph, an arc from node A to node B is considered to be the same as an arc from node B to node A. In a directed graph, the two directions are treated as distinct arcs.

Graph databases are used in a wide variety of different applications that can be generally categorized into two major types. The first type consists of complex knowledge-based systems that have large collections of class descriptions (referred to as "knowledge-based applications"), such as intelligent decision support and self learning. The second type includes applications that involve performing graph searches over transactional data (referred to as "transactional data applications"), such as social data and business intelligence. Many applications may represent both types. However, most applications can be characterized primarily as either knowledge-based or transactional data applications. Graph databases can be used to maintain large "semantic networks" that can store large amounts of structured and unstructured data in various fields. A semantic network is used as a form of knowledge representation and is a directed graph consisting of nodes that represent concepts, and arcs that represent semantic relationships between the concepts.

There are several approaches to encoding graph databases for storage. Graph data may be stored in memory as multidimensional arrays, or as symbols linked to other symbols. Another form of encoding is the use of "tuples," which are finite sequences or ordered lists of objects, each of a specified type. A tuple containing n objects is known as an "n-tuple," where n can be any non-negative integer greater than zero. A tuple of length 2 (a 2-tuple) is commonly called a pair, a 3 -tuple is called a triple, a four-tuple is called a quadruple, and so on.

The quantitative indication may be given as a number in a defined scale, wherein the defined scale is consistent for the entire data storage, or for a graph stored in the data storage. The quantitative indication may be in any form which enables comparison between quantitative indications to establish an order (in a repeatable and consistent manner). The significance of a property in describing an entity may represent, for example, the contribution to the semantic closure of an entity made by a property, or the degree of relevance of a property to the entity. Therefore, the quantitative indication may be or include an indication of those concepts.

The data storage includes the hardware and software components which facilitate the storage of data in the defined form, and may also refer to the stored data themselves. The hardware may be, for example, a distributed network of storage units, such as servers, and the software may be a database controller and firmware operating on the storage units. A data storage controller may be realised by a software running on a single computing apparatus as a centralised function, or may be realised by servers hosting the storage units operating in a cooperative manner. The data storage may comprise stored data representing a particular knowledge domain, or may comprise a plurality of sub-database each representing respective knowledge domains independently from one another. In particular embodiments, the data storage may be storing an ontology and the entities described by stored data are concepts of the ontology

An entity may be anything that is described by stored data, and may be, for example, a real world object or concept represented by a resource in the database or by a reference to a resource.

The pieces of information stored in the data storage may have a format prescribed by the data storage which is consistent for all pieces of information. Thus, the pieces of information may be considered data items forming part of a dataset, the dataset being the data stored in the data storage. The pieces of information are information in the sense that they have some meaning or semantic significance, and hence inform of a property or attribute of an entity. A property of an entity is an attribute, and may include one or more sub-properties. For example, the fact that one entity ('goats') is a subset of another entity ('animals') is a property of the first entity, and may impart more than one restriction on the description of the one entity ('animals' have a lifespan, and are multicellular).

The description of a particular entity is the aggregation of all of the properties represented by pieces of information about the particular entity (having the particular entity as a subject) stored in the data storage. Thus, the description of an entity comprises one or more pieces of information. A property is defined by/encoded as a property range (value) and a relationship between the property range (value) and the entity it describes.

It is noted that data read and write mechanism may also be referred to as a data read/write mechanism.

As an exemplary data format for storing pieces of information, each piece of information is encoded as a triple, denoting: the entity being described (as a subject); a range of the identified property (as an object); and a relationship between the range and the entity (as a predicate).

As an optional extension, the triples may be stored within quads, with the fourth element being the quantitative indication of the significance of the predicate and object in describing the subject.

The entity being described may be referred as the subject of the triple, the range of the identified property may be referred to as the object, and the relationship between the range and the entity may be referred to as the predicate. The triples provide for encoding of graph data (wherein graph data is exemplary of data stored in the data storage) by characterising the graph data as a plurality of subject-predicate-object expressions. In that context, the subject and object are graph nodes of the graph data, and as such are entities, objects, instances, or concepts (collectively 'graph resources'), and the predicate is a representation of a relationship between the subject and the object. The predicate asserts something about the subject by providing a specified type of link to the object. For example, the subject may denote a Web resource (for example, via a URI), the predicate denote a particular trait, characteristic, or aspect of the resource, and the object denote an instance, range, or example, of that trait, characteristic, or aspect. In other words, a collection of triple statements intrinsically represents directional graph data. The RDF standard provides formalised structure for such triples.

The Resource Description Framework (RDF) is a general method for conceptual description or modeling of information that is a standard for semantic networks. The amount of RDF data that is available nowadays is growing and it is already impossible to store it in a single server. In order to be able to store and search large amounts of data, the data must be maintained in multiple servers. Adding, deleting and querying data must be done in a coordinated way, using algorithms and data structures specially tailored for distributed systems. It is desirable to store graph data in a way which enables computationally efficient querying, maintenance, and manipulation of the data.

Advantageously, triples, and in particular RDF triples, provide a basic format for encoding data that is simple to implement, efficient to query, and provides for interoperability with a broad range of other available data stored.

The data storage in invention embodiments may be a database stored across a distributed network of storage units. Indeed, in such databases the desire for a mechanism such as that provided by invention embodiments, in which data consistency is improved in a computationally efficient manner, is particularly strong. The plurality of storage units may be considered a distributed network of storage nodes and may include a system of more than one distinct storage units in communication with one another. An exemplary communication paradigm is peer-to-peer (P2P), hence it may be that the distributed network of nodes is a peer-to-peer network of nodes. P2P is a distributed architecture that partitions tasks or workloads between peers. Peers (individual nodes or processes) are equally privileged, equipotent participants in the application. Each peer is configured to make a portion of its resources, such as processing power, disk storage or network bandwidth, directly available to other network participants, without the need for central coordination by servers or stable hosts. Peers can be considered to be both suppliers and consumers of resources, in contrast to a traditional client-server model where servers supply and clients consume. Advantageously, a P2P system can maintain large groups of nodes exchanging messages with a logarithmic communication cost.

An exemplary data storage structure to include in invention embodiments is a key value system in which each of the one or more storage areas are values of key-value pairs, and their associated triples are the respective keys.

Invention embodiments include implementations in which each of the triples, or other stored forms of the pieces of information, is a key of a key-value pair within a key-value system (KVS). Advantageously, storage of keys including a full piece of information (triple) within the key of a key-value system enables functions to be performed on the set of keys that return the full triple, rather than simply a link or identifier to where the triple might be found.

The value includes the quantitative indication of the significance of the property represented by the triple in describing the subject entity. Being stored in the key of a key-value pair may include representing the elements of the triple as a string object which is itself the key of the key-value pair.

A key-value system (KVS), or key-value store, is a plurality of stored keys and values, with each key having an associated value to which it is mapped via a logical function or logical tree, for example a hash table or hash map. A hash table or hash map is a data structure that uses a hash function to map keys (identifying values) to their associated values. In embodiments of the present invention, a hash function may be used to transform a key into an identification of the storage unit (storage resource) on which the triple and associated storage area are stored from among a plurality of storage units.

The triples and associated stored data, whether stored as a KVS or in any other form, are accessible to client applications, which issue requests/queries for data in the database. For example, a query may be for a single triple, or for a range of triples, and may be part of a graph traversal operation in which a sequence of triples linked semantically (for example, the object of one access being the subject of the next) are accessed.

Optionally, the data read and write mechanism is configured to receive a read query requesting information from the data storage and to respond to the read query by outputting from the data storage one or more pieces of information included in the requested information along with the quantitative indication associated with the or each of the one or more pieces of output information; and/or the data read and write mechanism is configured to receive a write instruction specifying an entity and a property of the entity, and to respond to the write instruction by writing to the data storage a piece of information representing the specified property as a contribution to the description of the specified entity, and to write the piece of information in association with a quantitative indication of the significance of the specified property in describing the specified entity.

Advantageously, the data read and write mechanism, by reading out data items (pieces of information) in association with a quantitative indication of their significance in describing an entity, provides applications with a basis with which to establish confidence levels on the data items that they are reading.

Advantageously, the data read and write mechanism ensures that data items (pieces of information/triples) in the data storage are stored with an associated quantitative indications which can be leveraged for prioritisation purposes (ordering of write operations) by a data read and write mechanism to implement an efficient eventual consistency model for the database. By prioritising the writing of pieces of information which have a high quantitative indication of significance, the accuracy of semantically significant data can be maintained at a high level without needing to dedicate the resources to data accuracy which would be necessary to maintain as high a level of accuracy without prioritisation.

In addition to storing quantitative indications, a data storage system may have the functionality to calculate said quantitative indications. In particular, the data storage system may include: a significance calculator configured to calculate the significance of a property in describing an entity; wherein the data read and write mechanism is configured to use the significance calculator to obtain the quantitative indication of the significance of the specified property in describing the specified entity.

Advantageously, the significance calculator provides a means for generating the quantitative indications. The significance calculator may be configured to generate the quantitative indication based on information derivable from the stored data itself, for example, from structural information about the entity and the number of other entities which are restricted by the same property, or the type of property. The significance calculator may be configured to calculate the quantitative indications for all properties describing an entity together, or at least to update the quantitative indications of other properties describing an entity when the quantitative indication of an existing property is changed or when a new property is added with a quantitative indication. For example, the quantitative indications of all properties describing a particular entity may be moderated so that their sum is equal to a fixed number, such as 1 or 100. The significance calculator may be configured to re-calculate the quantitative indications for properties in the graph periodically, for example at system idle time, in order to reflect changes in the graph which may have influenced the quantitative indications.

The significance calculator may be configured to calculate the quantitative indication of the significance of the property in describing the entity as a function of the number of entities described in the data storage relative to the number of entities described in the data storage which are described as having the property.

Advantageously, such a calculation technique provides a simple mechanism for attributing a quantitative indication to a property. The calculation awards higher quantitative indications to properties which are rare, and hence significant in discriminating the entity from other entities. The significance calculator may be configured to store statistics used in such calculations for utilisation in future calculations, for example, the number of times a particular property label and range appears in the data storage as a whole may be stored. The function may be a direct proportionality, or may be, for example, a logarithmic function.

Alternatively or additionally, the significance calculator may be configured to calculate the quantitative indication of the significance of the property in describing the entity based on the number of entities having the property in the subsumption hierarchy from the entity to the topmost level of an entity hierarchy ; wherein a subsumption relationship directed from one entity to another is an indication that the one entity is a subset of the other entity, and a subsumption hierarchy is defined by the subsumption relationships among a plurality of described entities.

In such embodiments, it may be that the quantitative indication is inversely proportional to the number of entities having the property in question in the subsumption hierarchy from the entity to the topmost level of an entity hierarchy. Advantageously, including information from the subsumption hierarchy of an entity in the calculation of the quantitative indications of the properties of that entity is simple to implement and requires only a small amount of graph information to be read. Furthermore, it enables properties that distinguish an entity from its ancestor properties to be afforded a higher quantitative indication than those which do not.

A subsumption hierarchy is formed by following links which denote subsumption, that is to say, that one graph entity is a sub class (or example, or subset, or in some other way inherits the properties) of another or that one graph entity is an instance of another. Subsumption links may also be referred to as "is-a" links. A subsumption hierarchy terminates at a root concept or entity, which may be added to the ontology or graph database artificially to act as a root, for example, some ontologies include a root entity "thing".

Furthermore, the significance calculator may be configured to calculate the quantitative indication of the significance of the property in describing the entity in dependence upon the number of queries explicitly querying the property as a proportion of the number of queries querying the entity, based upon data representing queries over a fixed past time period.

Advantageously, calculating the quantitative indications in dependence upon historical information detailing numbers or rates of queries exploits another source of information beyond the structural (graph database) information to assess the strength of the link between a property and the entity which is describes. In other words, it enables the calculator to exploit the assumption that, if a property is frequently used (read as part of a query to the entity) in the past, it is more likely to be queried in the future, and hence should be given higher priority in read operations, afforded by a higher quantitative indication.

As an exemplary means of exploiting the quantitative indications, the data storage system may further comprise a data write queue manager configured to maintain a queue of pieces of information that are in a form ready for writing to the data storage, wherein the order of data items in the queue is determined by their associated quantitative indications, with the highest at the front.

Advantageously, such embodiments provide a mechanism that enables priority-based concurrent writing to ensure that the most important data is written first. It is desirable when reading data to read out the most recent version of a data item (piece of information). However, updates to data items are made via write instructions. In dynamic data environments, there may be times at which write instructions are issued more quickly than they can be processed. Therefore, a read access to a data item for which there is pending write instruction does not return the latest version of the data item. Ensuring that data items being read out from a database are always the latest versions is computationally expensive and may result in slower response times to queries. Queuing write instructions in descending order of quantitative indications provides a means for ensuring that data items which are most likely to be read, or are more likely to lead to a misinterpretation of an entity if the data item is out of date, are written first. Thus, a balance between data integrity and efficient use of computing resources is struck.

In embodiments including a data write queue, the data write queue manager may be configured to periodically suspend processing leading to the addition of pieces of information to the queue until the contents of the queue at the start of said periodical suspension have all been written to the database.

Advantageously, such embodiments ensure that data integrity for less significant pieces of information is maintained at a level configurable by the user or database administrator by setting the periods at which the periodical suspensions occur. Alternatively or additionally, the periodical suspensions may be event triggered.

As an alternative or additional means of exploiting the quantitative indications, the data read and write mechanism may be configured to receive a read query specifying an entity, and to respond to the read query by outputting from the database pieces of information contributing to the description of the entity, in descending order of quantitative indications associated with said pieces of information.

Advantageously, embodiments which output the most significant pieces of information first, when outputting a description of an entity, ensure that the client application is presented with as complete a description of the entity as possible in as few data items as possible, hence the data traffic imposed by outputting a description of a given level of completeness or significance is reduced.

In terms of a formalised interface, such as an API, for accessing data in invention embodiments, the data read and write mechanism may be configured to receive a read query specifying an entity and a threshold cumulative quantitative indication, and to respond to the read query by outputting from the data storage, in an order determined by the associated quantitative indications from highest to lowest, pieces of information describing the specified entity until the cumulative total of the quantitative indications associated with pieces of information output in response to the query meets the specified threshold cumulative quantitative indication.

Advantageously, embodiments of the present invention allow the data storage to be queried in a way which reduces network traffic by only outputting the pieces of information required to meet a target level of significance or completeness of description of an entity. The quantitative indications representing the significance of an associated piece of information in describing an entity provide a means for measuring how complete a description (or what level of confidence or significance) has been output (by summing output quantitative indications) so that a read operation can specify a required level of completeness, and only pieces of information to meet that requirement are output. In addition, the quantitative indications provide a mechanism for assessing how complete/significant/confident a description is.

If all of the pieces of information describing the specified entity are output and the specified threshold cumulative quantitative indication is not met, the data read and write mechanism is configured to read from the write queue any pieces of information describing the specified entity, until the threshold cumulative quantitative indication is met.

Advantageously, reading directly from the write queue provides a means to complete an incomplete or not sufficiently complete description, and ensures that read data is the most recent version.

Embodiments of another aspect of the invention include a method of storing and managing data, the method comprising: storing a description of each of a plurality of entities, the description of an entity comprising one or more pieces of information, each piece of information representing a property contributing to the description; and storing, in association with each of the one or more pieces of information, a quantitative indication of the significance of the property in describing the entity; and prioritising data read operations based on the quantitative indications of the properties represented by pieces of information to be read; and/or prioritising data write operations based on the quantitative indications of the properties represented by pieces of information to be written.

Embodiments of another aspect of the invention include software which, when executed by a computer or a distributed network of computers, causes the computer or the distributed network of computers to become (or to function as) a data storage system embodying the invention. The distributed network of computers may include one or more storage units, which may also be distributed. The software may be a computer program or a suite of computer programs, which may be provided on a non-transitory storage medium.

Although the aspects (software/methods/apparatuses) are discussed separately, it should be understood that features and consequences thereof discussed in relation to one aspect are equally applicable to the other aspects. Therefore, where a method feature is discussed, it is taken for granted that the apparatus embodiments include a unit or apparatus configured to perform that feature or provide appropriate functionality, and that programs are configured to cause a computing apparatus on which they are being executed to perform said method feature.

In any of the above aspects, the various features may be implemented in hardware, or as software modules running on one or more processors. Features of one aspect may be applied to any of the other aspects.

The invention also provides a computer program or a computer program product for carrying out any of the methods described herein, and a computer readable medium having stored thereon a program for carrying out any of the methods described herein. A computer program embodying the invention may be stored on a computer-readable medium, or it could, for example, be in the form of a signal such as a downloadable data signal provided from an Internet website, or it could be in any other form.

The organisation and management of stored data may be performed by a data storage controller. In particular, the functionality of the data read and write mechanism may be provided by a data storage controller, that is to say, a data storage system may include a data storage controller comprising the data read and write mechanism. Furthermore, the data storage controller may provide the functionality of either or both of the data write queue manager and the significance calculator.

The data sotrage controller provides a set of functions which may be provided by a single centralised unit or apparatus, such as a computer, or which may be provided by a plurality of computers (i.e. servers) working cooperatively with one another to provide a set of functions which operate in a centralised manner. The data storage controller includes, among other units each configured to provide certain functionality, a data reading unit and a data writing unit. The data storage controller may be, for example, a database controller.

Preferred features of the present invention will now be described, purely by way of example, with reference to the accompanying drawings, in which:-

Figure 1 illustrates exemplary data included in a data storage system embodying the present invention;
Figure 2 illustrates a queue of pending write operations maintained by a data write queue manager;
Figure 3 sets out an exemplary processing flow in a read operation; and
Figure 4 illustrates an exemplary architecture of a data storage system.

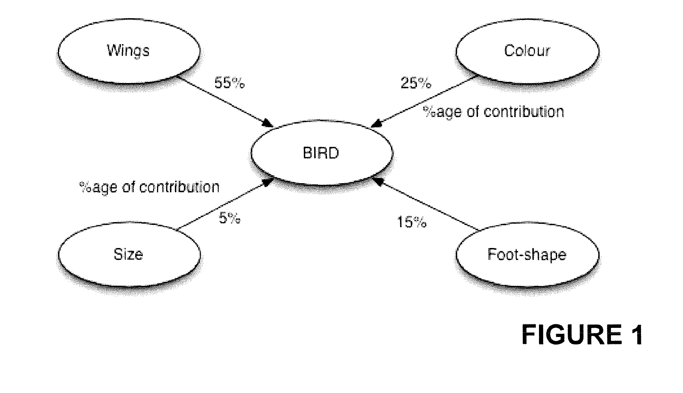

Figure 1 illustrates exemplary data included in a data storage system embodying the present invention. In the example of claim 1, the data storage is a graph database. The graph representation of the stored data is illustrated in Figure 1. Figure 1 illustrates a description of an entity, BIRD, in isolation from other entities. In invention embodiments, there may be more than one entity described in a database, and the entities may be linked by arcs represented on the graph.

An ontology models a domain using entities (referred to as concepts) and relationships among entities (properties/attributes). The description of a concept consists of all the ontological entities linked directly to the concept as properties/attributes. In a graph representation, these are all the vertices directly connected to the vertex representing the concept, e.g. Wing, Colour, Size, Foot-shape, in Figure 1 with respect to the Bird concept. Each semantic contributing property/attribute has an associated quantitative indication representing a degree of relevance, or confidence level, to define the entity, as depicted in the Figure 1. By capturing differences between the importance of properties and reflecting them using a quantitative indication such as a numeric value, write operations can be prioritised to those that have a higher degree of relevance, the subsequent read operations will be able to read the main concepts of an entity sooner, and make decisions about the existing data without having to wait for the complete set of data. Furthermore, read operations can be issued with a threshold of confidence level to filter the set of concepts to be returned. A lower threshold will lead to a faster response from the storage system, since it does not have to wait for all concepts to be available, with a possibility of lower accuracy or confidence.

In Figure 1, a graph data representation is used as an example. However, embodiments are not limited to any specific data representation formalism.

Generally speaking, graph data represents data as vertices and relationships among data as edges, making it ideal for the purpose of ontology modelling. In the RDF language (or other similar languages used to describe graph data), this can be represented as a Triple <S,P,O>, where S denotes the subject of the triple, P the predicate and O the object. Using triples, the entity depicted in the Figure 1 can be described as follows:

(*Bird, has$_{wing}$, Wings*)
(*Bird, has$_{colour}$, Colour*)
(*Bird, size, Size*)
(*Bird, has$_{shape}$, FootShape*)

A description of an entity is composed by triples having the entity being described as subject. Properties (edges in the graph representation) are stored as triples in the storage system. Each triple is associated with a value representing the significance level that the concept contributes to an entity. For this purpose, we need to use a Quad (tuple 4 with parts), to represent also the value.

The complete description of Figure 1 is as follows:

$((Bird, has_{wing}, Wings), 55\%)$
$((Bird, has_{colour}, Colour), 25\%)$
$((Bird, size, Size), 5\%)$
$((Bird, has_{shape}, FootShape), 15\%)$

The example of Figure 1 is of a description of a concept (BIRD) in an ontology. It may be that instances of that concept inherit the quantitative indications for the properties corresponding to the concept properties. For example, an instance of bird in a graph database, for example, "bird a", which is linked to "bird" by an "instance" relationship, may have elliptical-type wings. This may be represented by a piece of information denoting "bird a" as the subject, "has_wings" as the predicate, and "elliptical-type" as the object. The piece of information may inherit the 55% significance from the conceptual representation of bird, or the significance of the piece of information may be calculated independently of the corresponding significance in the concept.

Exemplary procedures for calculating the quantitative indication of the significance of a property in describing an entity shall now be set out. These procedures are illustrative of procedures which could be used in invention embodiments, and additional factors may be taken into account, or factors may be weighted and given more or less influence in dependence upon the graph database implementing the embodiment. The processes may be used independently of one another, or may be used in combination, for example, where a weighted average of quantitative indications calculated by more than one process is calculated and stored with the respective piece of information in the database.

As a first exemplary process for obtaining a quantitative indication, subjective values can be introduced by human knowledge engineers or domain experts at the time of modelling. For instance an expert might believe that having wings is more important for birds than any other properties and thus give higher significance values to "has_wing" property (as shown in Figure 1). This approach is more effective when the significance value is specific to an application, since having an application in mind may influence how importantly different properties are viewed.

As another exemplary process, embodiments may objectively derive the quantitative indication, for example, such a process may be carried out by a software component of a database controller such as a significance calculator. In the following calculation examples, the entity described by the properties happens to be a concept, which is an entity of an ontological model. However, the calculation examples are in no way limited to a particular type of entity.

An exemplary objective method for calculating a quantitative indication sig(p) is based upon term frequency-inverse document frequency:

$$\text{sig}(p) = pf \times icf$$

where *pf* is the property frequency and *icf* the inverse concept frequency similar to term frequency and inverse document frequency in information retrieval applications. *pf* and *icf* may be computed as follows:

$$icf = \log \frac{|C|}{|C_p|}$$

where $|C|$ is the total number of concepts in the database/knowledge model/ontology, and $|C_p|$ is the total number of concepts who have the given property as part of the concept definition. The application of the logarithmic function is an implementation option, and is used to smooth the distinction between sig(p) for properties having high ratios of $|C|/|C_p|$. The rationale of *icf* is based on the assumption that if a property appears in the description of many entities (concepts), it becomes less important in semantically shaping a particular entity. When the number of entities increases, the property's defining contribution diminishes.

An exemplary technique for calculating pf is represented by the following equation:

$$pf = \frac{1}{|H_p|}$$

where $|H_p|$ is the total number of property appearance of P along the entire path from the current concept to the root of the concept subsumption hierarchy. Note that ontological subsumption hierarchies normally form a tree structure with an artificially introduced top concept, e.g. (ow1:Thing), which may also be referred to as a root concept. If such a top concept does not present, $|H_p|$ goes back to the topmost concept as the ancestor of the current concept. The rationale behind property frequency is that if a property is only referred to by the child concept, it can be considered as a more important factor differentiating the concept from its ancestors. Otherwise, the significance should decrease when more ancestors refer to the property.

Significance may be normalised across all the properties of a concept so that each entity described in a database or dataset has an equal sum of significance values (quantitative indications) associated with its properties. For example, significances may be given as percentages summing to 100, or may be given as decimals summing to 1. The following equation may be used in the normalisation process:

$$\text{sig}_c(p) = \text{sig}(p) \cdot \frac{1}{\sum_{p \text{ is a property of } c} \text{sig}(p)}$$

The results are the significance of each property in term of contributing to the definition of concept $C$. The sum of all properties then equal 1.

Alternatively or additionally, the significance level can be based on historical query record: if certain properties of a concept or its instances are frequently queried, their significance levels increase. Given $t$, a point of time in history, the value his(p) may be quantified as follows - which may be used as the significance level (quantitative indication), as a weighted component in a weighted average calculation to find the significance level, or used directly as the significance level but moderated, updated, or normalised by a multiplication factor:

$$\text{his}(p) = \frac{|H_p(c)|}{|H(c)|}$$

where $|H(c)|$ is the total number of queries on concept $c$ and $|H_p(c)|$ is the total number of queries which explicitly queried property $p$ of $c$. Note that in examples in which the entity is a concept of an ontological model, querying an instance of $c$ may be considered the same as querying the concept directly. This exemplary approach to calculating quantitative indications exploits the assumption that if a property is frequently used in the past, it becomes more important than other properties and is more likely to be queried in the future. Therefore, they should be given higher number values.

Each of the three exemplary processes for acquiring significance levels have different advantages and hence lend themselves to different implementation scenarios. The final value of quantitative indication of a property may be based on any individual method (depending on the characteristics of the domain and applications) or a combination of all or any subset of the three. Combination can be based on linear aggregation, max/min, or geometric mean. The users (applications) may be given the flexibility to decide which significance calculation method and/or what aggregation should be used. So that a significance calculator may be configured to use any combination of methods, or to implement any combination methods, even though for a particular application it may use only a single method or a subset of methods. Furthermore, the above methods are not exhaustive, and other methods for calculating or obtaining a quantitative indication of the significance of a property in defining an entity or concept, or equivalent values, can be used in embodiments.

Examples will now be given of write operations in data storage systems, which may be to update existing data or to write new data to the data storage. Write operations may be instructed by client applications, for example, via an API, and handled by a database controller.

An exemplary write operation is defined as the following API:

*Void write(Triple t, Integer significance)*

In this example, Triple t is an example of a piece of information describing an entity in a database (be it a concept or otherwise), and Integer significance is an example of a quantitative indication of the significance of the property represented by the triple in describing the entity which is the subject of the triple. The Integer significance may have been calculated by a significance calculator included in the database controller upon initial receipt of a write instruction. For example, a write instruction received by the database controller may merely detail a piece of information representing a property contributing to the description of an entity in the data storage. The database controller may then be configured to use a significance calculator to calculate a quantitative indication of the significance of the property represented by the piece of information in describing the entity. This calculation may include or lead to the recalculation of the quantitative indications of other properties contributing to the description of the same entity, for example, due to changes which will be made to the description of the entity in the data storage, and possibly in order to maintain a normalised sum of all of the quantitative indications of properties describing a single entity. Such recalculations may be performed upon receipt of the new piece of information prior to it being written to the data storage, or may be performed subsequently to the new piece of information being written. Such recalculations will, of course, lead to more write operations of the form given above, in order to store the recalculated significance levels in the data storage. The exemplary write operation set out above writes to the data storage (for example, the distributed network of data storage units) the given data item, in the example a triple, with the given significance level. It either does not return anything or returns a Boolean value to indicate whether the writing process is successfully conducted. The parameter "significance" (which may be obtained by one of the exemplary methods set out above, or in some other way) can be represented in different ways, but for the sake of simplicity, in this example is a numeric percentage value rounded up to the closest integer between 0 and 100, inclusive. The greater the value is, the more significant the associated piece of information is in the definition of an entity.

The data read and write mechanism (which may be provided as a component of a database controller) composes the piece of information and the obtained quantitative indication into a data item, and hence the two can be said to be associated. In the example in which the piece of information is a triple, the data item composed of the triple and the quantitative indication is a Quad. The database controller sends this quad, or adds this quad, to a queue of data items to be written into the storage system. The queue is ordered by a data write queue manager (a component which may be provided as part of a database controller) in dependence upon the quantitative indications, in descending order of (the value of the) quantitative indication from front to back. If a new data item being added to the queue has the same (equal in value) quantitative indication as a data item already present in the queue, the newer data item will be placed behind data items already in the queue having the same quantitative indication, following the well known FIFO order. Otherwise, the data write queue manager will search for the correct place in the queue, ordering the data items according to their quantitative indications of significance level. Data items may be included in the queue which do not include a quantitative indication. Such data items are treated in the queue as though they have a significance level of 0%, and written to the storage system with a significance level of 0%. Each data item is written to the storage system by the data read and write mechanism when it reaches the front of the queue.

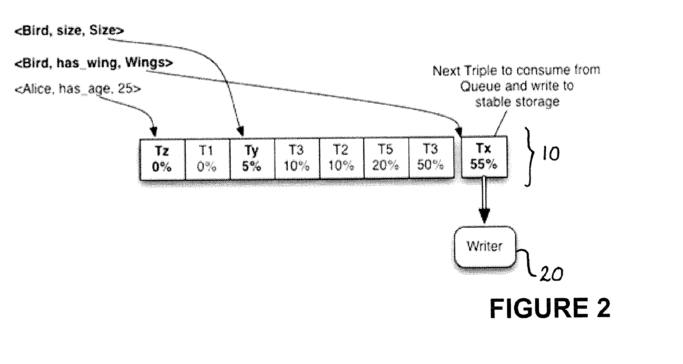

Figure 2 illustrates a queue 10 of pending write operations, which are written to data storage by a writer 20 (wherein the writer 20 is exemplary of a component of a data read and write mechanism). As depicted in this Figure, when new data items arrives (Tx, Ty, Tz), the data write queue manager will place the data among the existing data items in the queue (T1, T2, T3, T4, T5) according to its significance level. The data item Tz triple is placed at the rear end of the queue, as it had no significance level (0%). The data item Tx is placed at the front end of the queue as it has a higher significance level than any existing data item in the queue. The writer procedure is always consuming triples from the front of the queue and writing them to stable storage.

Alternatively or additionally, queue management procedures may be based on standard sorting and queuing algorithms. For example, ties between data items having equal quantitative indications can be broken by alphabetic order of the pieces of information. As a further optional procedure in embodiments, the writing operation may be enhanced by semantic considerations. For instance, when the writing of one data item is performed by the writer 20, data items describing the same entity as the data item being written may be moved in the queue to the front of all the data items having the same significance values.

It is possible that the data with very low significance values might be continuously pushed to the end of the queue 19 due to data with higher priority being inserted. This creates "starvation"-like issues with data items competing for resources. As an optional procedure, the starvation-like problem may be dealt with by periodically locking the queue (preventing the addition of new data items to the queue 10) and writing to the data storage all the data in the queue 10 at the time of locking, then unlocking the queue 10. This will ensure that data with very low priority are eventually written to the stable storage. When locking the queue from new write operations, applications may be paused by a flow control mechanism, to avoid running out of memory.

In addition, queue management procedures may include checking for and resolving conflicting significances. For instance, when a data item $t = ((Tweety, has_{wing}, SmallWing), 80\%)$ is queued, the same triple (as an example of a piece of information) might already exist in the queue 10 with a different significance value. As an exemplary procedure, the conflict may be resolved by keeping the data items with the highest significance values. Therefore, in the above example, if (($Tweety, has_{wing}, SmallWing$), $x$%) exists in the queue where $x > 80$, $t$ 's queuing request is discarded. If, otherwise (($Tweety, has_{wing}, SmallWing$), $y$%) exists in the queue where $y \leq 80$, the existing triple will be deleted from the queue while $t$ is inserted at the right position in the queue. Alternatively, it may be that a data item being added to the queue and having the same piece of information (triple) as a data item already in the queue 10, is added to the queue 10 at a position determined by its quantitative indication, and the data item which was already in the queue 10 is removed from the queue 10 without being written to the storage system.

An exemplary read operation is defined as the following API:

Set read(TriplePattern *pattern,* Integer *confidence*)

This operation reads a set of triples (as examples of pieces of information) from the distributed storage system. The pattern might be, for example, all the pieces of information describing a particular entity, which in terms of triples could be represented as <S, ?, ?>. The database controller (for example, the data read and write mechanism) is configured to return the specified set of triples, which could be a single triple, thus providing the possibility of iterating over the result set. The returned triples satisfy the triple pattern specified in the operation and have an aggregate confidence level above the numeric threshold given as a parameter to this operation (confidence). Therefore, it may be that the returned triples all satisfy the specified triple pattern, but are not the complete set of triples that satisfy the triple pattern, because the read operation was stopped or suspended once the aggregate confidence level of read triples satisfying the specified triple pattern exceeded the threshold confidence level. It is noted that the confidence level is represented by the quantitative indication stored in association with triples, and furthermore that the threshold confidence level will be between 0 and the normalised total confidence level for pieces of information describing a single entity (probably 1 or 100). The TriplePattern may be given in form of a Triple, where some of the triple fields are null. For instance, (*S,null,null*) represents all the triples that have *S* as subject and (*null,null,null*) represents the entire set of stored triples. The representation for the threshold value must be compatible with the significanceLevel value of the write operation. In the particular example, this value is an integer between 0 and 100 (inclusive). Note that when the application is reading regular data, it can receive all the data without imposing a threshold.

When reading data from storage, embodiments provide a mechanism to inform the reader (being users and/or applications) the quality of the data being read.

Data consumers may require high semantic closure, wherein semantic closure can be represented by an accumulation of the quantitative indications of the significance of read pieces of information in describing an entity. For example, it may be that a data consumer (application or user) delays utilisation of a concept or entity until the aggregate of the quantitative indications read by that point in time indicate that a majority of the definition has been read. What constitutes a majority is definable by a user or application either by including a threshold in a read request, or by simply instructing the data storage system to stop outputting relevant data items once enough data has been read.

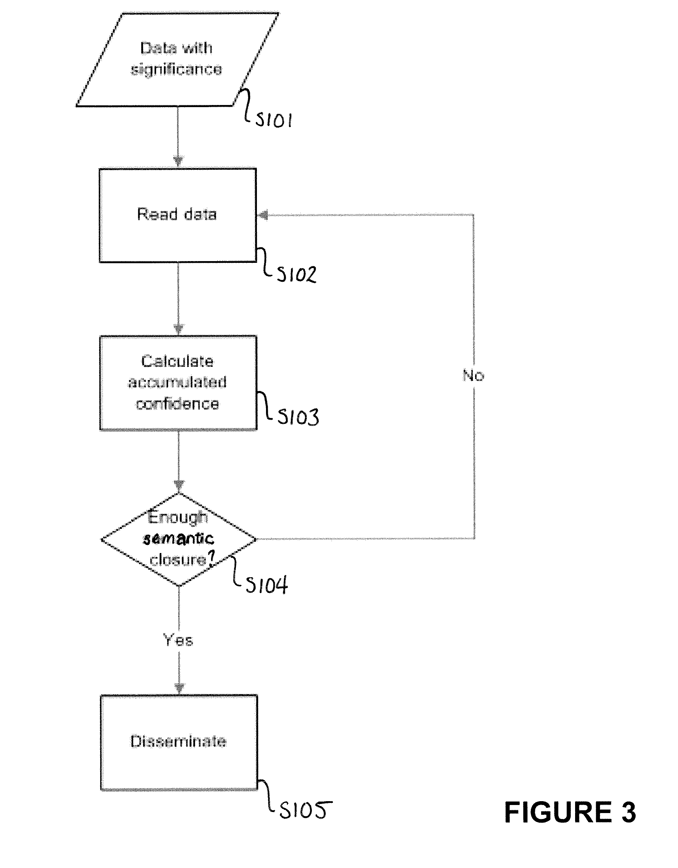

An exemplary processing flow in a read operation is set out in Figure 3. At step S101, a read request is received at a data read and write mechanism. The read request specifies a pattern which returned pieces of information should satisfy. The read request also specifies a value between 0 and the maximum significance with which an entity can be described, for example, 1 or 100. In this particular example, it is assumed that the specified pattern is all of the pieces of information describing a particular entity. Hence, the specified value defines a minimum aggregate value of quantitative indications that should be returned in response to the read request.

Of course, more complex queries are possible, and the a data read and write mechanism may apply some logic in order to separate a more complex query into queries of a form specifying an entity and a minimum aggregate value. For example, consider a read request which specifies a pattern which includes a range of entities, and a significance value. By reference to the stored data, the a data read and write mechanism may determine the individual entities that are included in the specified range, and then treat the complex query as a series of queries specifying a particular entity. For each particular entity, the same minimum aggregate value, corresponding to the significance value included in the complex query.

Returning to the simpler example of Figure 3, in which a read request is received specifying a particular entity and a minimum aggregate value. At step S102 the first piece of information describing the entity is read, along with its associated quantitative indication. The pieces of information describing a particular entity are read in descending order of quantitative indication. Thereby, the most complete description of an entity can be read from the database in as a few read-out data items as possible.

At S103, the quantitative indication associated with the piece of information read at S102 is added to a cumulative total of quantitative indications associated with pieces of information describing the same particular entity read out in response to the read request.

At step S104 the cumulative total is compared with the minimum aggregate value specified in the read request. If the cumulative total exceeds the minimum aggregate value, then it is deemed that enough semantic closure of the particular entity has been achieved via the read-out data items, and at S105 the read-out data items are disseminated as a response to the read request. If, at S104, the cumulative total does not exceed the minimum aggregate value, then the flow returns to S102 and the next most significant data item describing the particular entity is read. The flow continues around the loop defined by steps S102 to S104 until the cumulative total exceeds the minimum aggregate value.

Accumulated confidence is computed simply as the sum of numeric significance values associated with individual data items. Therefore, complete semantic closure (a complete description of an entity) may be considered to have been achieved when the accumulated value reaches 100%, or whatever is set as the normalised maximum total quantitative indications stored in association with properties of a single entity.

As a further usage example, data consumers can be provided with the read data items (piece of information and associated quantitative indication) one-by-one as they are retrieved from storage, or in some other way, and make further reasoning and/or conclusions based on incomplete semantics. Advantageously, the accumulated confidence value can inform downstream consumers the quality of inference and conclusions. Again, the accumulated confidence can be simple addition of all numeric significance values (quantitative indications). An example of the output is:

$$\mathrm{confidence}(f(c)) = \sum_{p \in \lfloor c \rfloor} \mathrm{sig}_c(p)$$

where $f(c)$ is an arbitrary function utilising concept $c$ and $\lfloor c \rfloor$ denotes the current available data of $c$. The above confidence value can be enriched if $f(c)$ provides only an approximation with certain types of confidence (i.e. historical $his(p)$ and/or pf-icf $sig(p)$, as set out above). In this case, the final result may be an average or summation of both.

When an application is reading a concept from the proposed system, a scenario may occur in which the data items already available on the lower level storage system may not be enough to satisfy the required confidence level. If this happens, this is an indication that new data is concurrently being written about the required concept. As an optional process in invention embodiments, in this scenario, the read operation (which operates concurrently, on a different thread) will check the writing queue. If there are data items already queued and waiting to be stored, these data items can immediately become part of the result set to be returned by the read operation (i.e. at S102 data may be read directly from the write queue 10). At this time, the confidence level is checked again. If the result set still does not contain enough new data items to satisfy the required confidence level, the read operation will intercept all the elements (data items) that are added to the queue, storing a copy of relevant data items in the result set, before they are queued. After creating a copy, the element is queued as it was described before. This algorithm/process ensures that, even if the system is congested, read operations that are being concurrently executed with relevant write operations can avoid the latency of the write operation and return the results faster.

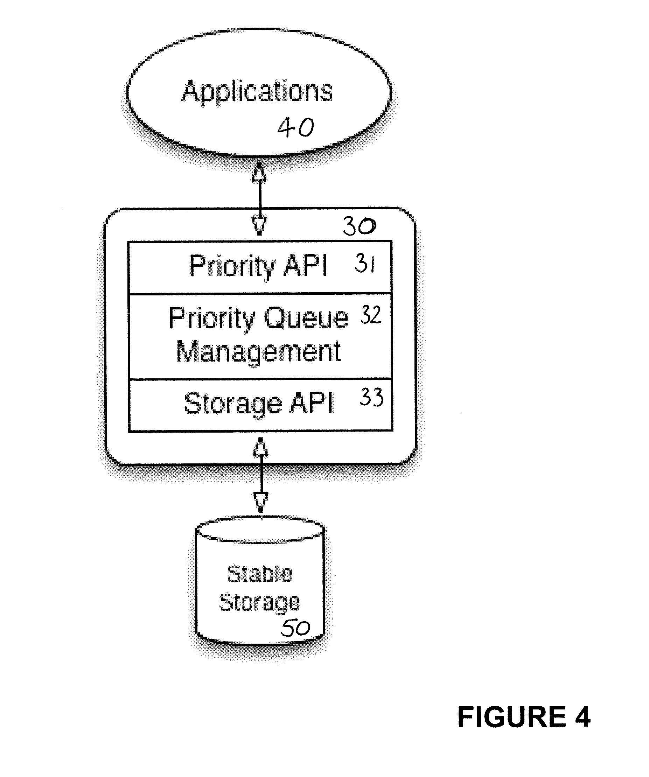

Figure 4 illustrates an exemplary architecture of a data storage system. The applications 40, may be considered to be part of the data storage system or may be considered to be external to the data storage system. The applications represent 'consumers' of data configured to make read and write requests to the data storage system.

A data storage controller 30 comprises a priority API 31, a priority queue management unit 32, and a storage API 33, which may all be provided as software components. The stable storage 50 is data storage such as a hardware apparatus onto which data items are stored, and may be, for example a local disk, a Network Attached Storage, or even a distributed storage system. As mentioned elsewhere, the data storage controller 30 may be realised by a software running on a single computing apparatus as a centralised function, or may be realised by servers hosting the storage units operating in a cooperative manner. On top of a normal storage API 33 which facilitates read and write requests to the storage unit 50, the system features a priority queue management unit 32 where priority is obtained and associated with data. Thus, the priority queue management unit 32 is exemplary of the data write queue manager and the significance calculator mentioned elsewhere in this document.

Applications 40 communicate with storage 50 via the priority read/write API 31. An example of such an API is provided by the read/write example APIs previously defined in this document. The priority read/write API 31 is exemplary of an interface for utilising the data read and write mechanism mentioned elsewhere in this document. Read and write operations are issued by the priority queue management unit (PQM) 32, which uses a lower level storage API 33 for accessing and writing data from/to the storage unit 50. The PQM 32 is responsible for maintaining the queue 10. Read operation processing may also be performed by the PQM 32, for example, implementing the process set out in Figure 3 and described above.

In embodiments wherein the database is stored in a distributed storage system, such as a distributed network of servers, the writing queue 10 may be maintained globally (at a central location or maintaining a distributed queue using global ordering mechanisms) or a separate writing queue 10 may be maintained at each storage server. In the latter case, significance values of data items/triples are still computed globally based on the complete ontology model. Conflict of significance can happen when multiple ontologies are stored. In this case, the integrated significance value can be either defined by the human experts or computed with linear aggregation over all corresponding data items/triples.

**Claims**

1. A data storage system comprising:

   a data storage configured to store a description of each of a plurality of entities, the description of an entity comprising one or more pieces of information, each piece of information representing a property contributing to the description, the data storage being further configured to store, in association with each of the one or more pieces of information, a quantitative indication of the significance of the property in describing the entity; and a data read and write mechanism configured: to prioritise data read operations based on the quantitative indications of the properties represented by pieces of information to be read; and/or to prioritise data write operations based on the quantitative indications of the properties represented by pieces of information to be written.

2. A data storage system according to claim 1, wherein
   each piece of information is encoded as a triple, denoting:

   the entity being described;
   a range of the identified property; and
   a relationship between the range and the entity.

3. A data storage system according to claim 1 or 2, wherein the data storage is a key value store in which key value pairs are composed of an encoded version of one of the pieces of information as the key and the associated quantitative indication as at least a portion of the value.

4. A data storage system according to any of the preceding claims, wherein:

   the data read and write mechanism is configured to receive a read query requesting information from the data storage and to respond to the read query by outputting from the data storage one or more pieces of information included in the requested information along with the quantitative indication associated with the or each of the one or more pieces of output information; and/or
   the data read and write mechanism is configured to receive a write instruction specifying an entity and a property of the entity, and to respond to the write instruction by writing to the data storage a piece of information representing the specified property as a contribution to the description of the specified entity, and to write the piece of information in association with a quantitative indication of the significance of the specified property in describing the specified entity.

5. A data storage system according to claim 4, further comprising:

   a significance calculator configured to calculate the significance of a property in describing an entity; wherein the data read and write mechanism is configured to use the significance calculator to obtain the quantitative indication of the significance of the specified property in describing the specified entity.

6. A data storage system according to claim 5, wherein
   the significance calculator is configured to calculate the quantitative indication of the significance of the property in describing the entity as a function of the number of entities described in the data storage relative to the number of entities described in the data storage which are described as having the property.

7. A data storage system according to claim 5 or 6, wherein the significance calculator is configured to calculate the quantitative indication of the significance of the property in describing the entity based on the number of entities having the property in the subsumption hierarchy from the entity to the topmost level of an entity hierarchy; wherein a subsumption relationship directed from one entity to another is an indication that the one entity is a subset of the other entity, and a subsumption hierarchy is defined by the subsumption relationships among a plurality of described entities.

8. A data storage system according to any of claims 5 to 7, wherein the significance calculator is configured to calculate the quantitative indication of the significance of the property in describing the entity in dependence upon the number of queries explicitly querying the property as a proportion of the number of queries querying the entity, based upon data representing queries over a fixed past time period.

9. A data storage system according to any of claims 4 to 8, further comprising:

a data write queue manager configured to maintain a queue of pieces of information that are in a form ready for writing to the data storage, wherein the order of data items in the queue is determined by their associated quantitative indications, with the highest at the front.

10. A data storage system according to claim 9, wherein
the data write queue manager is configured to periodically suspend processing leading to the addition of pieces of information to the queue until the contents of the queue at the start of said periodical suspension have all been written to the data storage.

11. A data storage system according to any of claims 4 to 10, wherein the data read and write mechanism is configured to receive a read query specifying an entity, and to respond to the read query by outputting from the data storage pieces of information contributing to the description of the entity, in descending order of quantitative indications associated with said pieces of information.

12. A data storage system according to any of claims 4 to 11, wherein the data read and write mechanism is configured to receive a read query specifying an entity and a threshold cumulative quantitative indication, and to respond to the read query by outputting from the data storage, in an order determined by the associated quantitative indications from highest to lowest, pieces of information describing the specified entity until the cumulative total of the quantitative indications associated with pieces of information output in response to the query meets the specified threshold cumulative quantitative indication.

13. A data storage system according to claim 12, wherein, if all of the pieces of information describing the specified entity are output and the specified threshold cumulative quantitative indication is not met, the data read and write mechanism is configured to read from the write queue any pieces of information describing the specified entity, until the threshold cumulative quantitative indication is met.

14. A method of storing and managing data, the method comprising:

storing a description of each of a plurality of entities, the description of an entity comprising one or more pieces of information, each piece of information representing a property contributing to the description; and
storing, in association with each of the one or more pieces of information, a quantitative indication of the significance of the property in describing the entity; and
prioritising data read operations based on the quantitative indications of the properties represented by pieces of information to be read; and/or prioritising data write operations based on the quantitative indications of the properties represented by pieces of information to be written.

15. Software which, when executed by a computer or a distributed network of computers, causes the computer or the distributed network of computers to become the data storage system according to any of claims 1 to 13.

**Amended claims in accordance with Rule 137(2) EPC.**

1. A data storage system comprising:

a data storage configured to store pieces of information, wherein each piece of information represents a property of one of a plurality of entities, and the description of an entity from among the plurality of entities is the aggregation of all the properties of the entity represented by stored pieces of information, the data storage being further configured to store, in association with each of the one or more pieces of information, a quantitative indication of the significance of the property in describing the respective entity, the significance of the property in describing the respective entity being the contribution to the semantic closure of the respective entity made by the property; and
a data read and write mechanism configured: to prioritise data read operations based on the quantitative indications of the properties represented by pieces of information to be read; and/or to prioritise data write operations based on the quantitative indications of the properties represented by pieces of information to be written.

**2.** A data storage system according to claim 1, wherein
each piece of information is encoded as a triple, denoting:

> the entity being described;
> a range of the identified property; and
> a relationship between the range and the entity.

**3.** A data storage system according to claim 1 or 2, wherein the data storage is a key value store in which key value pairs are composed of an encoded version of one of the pieces of information as the key and the associated quantitative indication as at least a portion of the value.

**4.** A data storage system according to any of the preceding claims, wherein:

> the data read and write mechanism is configured to receive a read query requesting information from the data storage and to respond to the read query by outputting from the data storage one or more pieces of information included in the requested information along with the quantitative indication associated with the or each of the one or more pieces of output information; and/or
> the data read and write mechanism is configured to receive a write instruction specifying an entity and a property of the entity, and to respond to the write instruction by writing to the data storage a piece of information representing the specified property as a contribution to the description of the specified entity, and to write the piece of information in association with a quantitative indication of the significance of the specified property in describing the specified entity.

**5.** A data storage system according to claim 4, further comprising:

> a significance calculator configured to calculate the significance of a property in describing an entity; wherein the data read and write mechanism is configured to use the significance calculator to obtain the quantitative indication of the significance of the specified property in describing the specified entity.

**6.** A data storage system according to claim 5, wherein
the significance calculator is configured to calculate the quantitative indication of the significance of the property in describing the entity as a function of the number of entities described in the data storage relative to the number of entities described in the data storage which are described as having the property.

**7.** A data storage system according to claim 5 or 6, wherein the significance calculator is configured to calculate the quantitative indication of the significance of the property in describing the entity based on the number of entities having the property in the subsumption hierarchy from the entity to the topmost level of an entity hierarchy; wherein a subsumption relationship directed from one entity to another is an indication that the one entity is a subset of the other entity, and a subsumption hierarchy is defined by the subsumption relationships among a plurality of described entities.

**8.** A data storage system according to any of claims 5 to 7, wherein the significance calculator is configured to calculate the quantitative indication of the significance of the property in describing the entity in dependence upon the number of queries explicitly querying the property as a proportion of the number of queries querying the entity, based upon data representing queries over a fixed past time period.

**9.** A data storage system according to any of claims 4 to 8, further comprising:

> a data write queue manager configured to maintain a queue of pieces of information that are in a form ready for writing to the data storage, wherein the order of data items in the queue is determined by their associated quantitative indications, with the highest at the front.

**10.** A data storage system according to claim 9, wherein
the data write queue manager is configured to periodically suspend processing leading to the addition of pieces of information to the queue until the contents of the queue at the start of said periodical suspension have all been written to the data storage.

**11.** A data storage system according to any of claims 4 to 10, wherein the data read and write mechanism is configured to receive a read query specifying an entity, and to respond to the read query by outputting from the data storage pieces of information contributing to the description of the entity, in descending order of quantitative indications associated with said pieces of information.

**12.** A data storage system according to any of claims 4 to 11, wherein the data read and write mechanism is configured to receive a read query specifying an entity and a threshold cumulative quantitative indication, and to respond to the read query by outputting from the data storage, in an order determined by the associated quantitative indications from highest to lowest, pieces of information describing the specified entity until the cumulative total of the quantitative indications associated with pieces of information output in response to the query meets the specified threshold cumulative quantitative indication.

**13.** A data storage system according to claim 12, wherein, if all of the pieces of information describing the specified entity are output and the specified threshold cumulative quantitative indication is not met, the data read and write mechanism is configured to read from the write queue any pieces of information describing the specified entity, until the threshold cumulative quantitative indication is met.

**14.** A method of storing and managing data, the method comprising:

storing pieces of information, wherein each piece of information represents a property of one of a plurality of entities, and the description of an entity from among the plurality of entities is the aggregation of all the properties of the entity represented by stored pieces of information; and
storing, in association with each of the one or more pieces of information, a quantitative indication of the significance of the property in describing the respective entity, the significance of the property in describing the respective entity being the contribution to the semantic closure of the respective entity made by the property;; and
prioritising data read operations based on the quantitative indications of the properties represented by pieces of information to be read; and/or prioritising data write operations based on the quantitative indications of the properties represented by pieces of information to be written.

**15.** Software which, when executed by a computer or a distributed network of computers, causes the computer or the distributed network of computers to become the data storage system according to any of claims 1 to 13.

FIGURE 1

FIGURE 2

**FIGURE 3**

**FIGURE 4**

Europäisches
Patentamt

European
Patent Office

Office européen
des brevets

# EUROPEAN SEARCH REPORT

Application Number

EP 12 19 1691

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br><br>A | Michael Squadrito ET AL: "Towards Priority Ceilings in Object-Based Semantic Real-Time Concurrency Control", In Proceedings of RTDB'96: The 1996 Workshop on Real-Time Databases, 31 December 1996 (1996-12-31), XP55059178, Retrieved from the Internet: URL:http://citeseerx.ist.psu.edu/viewdoc/d ownload;jsessionid=BACD57B74F49149E6E61E6E D889C5019?doi=10.1.1.46.7761&rep=rep1&type =pdf [retrieved on 2013-04-11]<br>* the whole document * | 1,4,9, 10,14,15<br><br><br><br><br><br><br><br><br>2,3,5-8, 11-13 | INV.<br>G06N5/00<br>G06N5/02<br>G06F17/30 |
| A | US 2005/209882 A1 (JACOBSEN JEFFRY B [US] ET AL) 22 September 2005 (2005-09-22)<br>* abstract * | 1-15 | |
| A | US 2008/235215 A1 (SUZUKI HIROYUKI [JP]) 25 September 2008 (2008-09-25)<br>* abstract * | 1-15 | TECHNICAL FIELDS SEARCHED (IPC)<br><br>G06N<br>G06F |

The present search report has been drawn up for all claims

| Place of search | Date of completion of the search | Examiner |
|---|---|---|
| The Hague | 11 April 2013 | Valencia, Erika |

EPO FORM 1503 03.82 (P04C01)

**ANNEX TO THE EUROPEAN SEARCH REPORT
ON EUROPEAN PATENT APPLICATION NO.** EP 12 19 1691

This annex lists the patent family members relating to the patent documents cited in the above-mentioned European search report.
The members are as contained in the European Patent Office EDP file on
The European Patent Office is in no way liable for these particulars which are merely given for the purpose of information.

11-04-2013

| Patent document cited in search report | Publication date | Patent family member(s) | Publication date |
|---|---|---|---|
| US 2005209882 A1 | 22-09-2005 | CN 1674029 A<br>DE 102005012628 A1<br>US 2005209882 A1 | 28-09-2005<br>13-10-2005<br>22-09-2005 |
| US 2008235215 A1 | 25-09-2008 | JP 2008234403 A<br>US 2008235215 A1 | 02-10-2008<br>25-09-2008 |

EPO FORM P0459

For more details about this annex : see Official Journal of the European Patent Office, No. 12/82